(19) Europäisches Patentamt
European Patent Office
Office européen des brevets

(11) **EP 1 942 403 A2**

(12) **EUROPEAN PATENT APPLICATION**

(43) Date of publication:
**09.07.2008 Bulletin 2008/28**

(51) Int Cl.:
***G06F 3/048*** *(2006.01)*

(21) Application number: **08100071.3**

(22) Date of filing: **03.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **04.01.2007 KR 20070001064**

(71) Applicant: **Samsung Electronics Co., Ltd.**
**Suwon-si**
**Gyeonggi-do (KR)**

(72) Inventor: **Kwon, Soon-Hwan**
**c/o Samsung Electronics Co. Ltd.**
**Gyeonggi-do (KR)**

(74) Representative: **Grünecker, Kinkeldey,**
**Stockmair & Schwanhäusser**
**Anwaltssozietät**
**Leopoldstrasse 4**
**80802 München (DE)**

(54) **Data scrolling apparatus and method for mobile terminal**

(57) A data scrolling apparatus and method for a mobile terminal. For this operation, if a touch-screen input is received from the user, determines whether a touch-screen input received from a user is an input for performing a touch-scroll function for moving a scroll bar. If it is determined that the touch-screen input is the input for performing the touch-scroll function, a touch-scroll area set according to a currently displayed scroll bar is displayed on a display unit. Further, when the touch-screen input is included in the scroll area, the scroll bar is moved according to the touch-screen input received from the user, and data items scrolled by the movement of the scroll bar are displayed on the screen. Accordingly, the user can easily move a scroll bar without using a separate tool or increasing the size of the scroll bar.

FIG.1

EP 1 942 403 A2

**Description**

The present invention relates generally to the scrolling of a mobile terminal, and in particular, to the scrolling of data based on a touch-screen input.

In general, scrolling is the act of shifting data displayed on a screen, or the act of continuously vertically or horizontally moving text on the screen so as to view content that is not currently displayed on the screen. Scrolling-down means that the entire screen is moved upwards by one line at a time, and thus each new line appears at the bottom of the screen and each line at the top of the screen disappears. Such scrolling is typically used to search for specific data desired by a user when a plurality of data items is stored in the form of a list.

In the case of a mobile terminal, such a scrolling method is also used to manage a plurality of data items arranged in the form of a list. For example, this scrolling method can be used to search a phone number list, including a plurality of phone numbers, for a user's desired phone number. In this case, the user can find desired data by using a scroll bar that is used to notify the user of a portion of the entire area to be displayed on the screen through the scrolling method.

However, with the current tendency toward mobile terminals with a small size and a lightweight, mobile terminals have been miniaturized and lightened. Moreover, recently, in order to implement a small size and a lightweight, mobile terminals, from which a keypad provided with a plurality of hardware keys has been removed and in which a touch screen allowing a user to input a key while directly touching a display unit is employed, have been introduced.

Therefore, currently marketed mobile terminals enable a user's desired data to be searched for by moving a scroll bar according to the user's input generated using the touch screen. However, as the size of a mobile terminal decreases, the size of a display unit inevitably decreases. In this case, the size of the touch screen inevitably decreases according to the size of the display unit. Accordingly, the displayed scroll bar may be greatly limited in size.

In order to cope with the size limitation of the scroll bar, typical mobile terminals enable the scroll bar to be moved using a separate tool having a sharp tip, such as a stylus pen. However, in this case, the separate tool, such as the stylus pen, is required inconveniently.

Further, if the area of the scroll bar is widened to allow a user to easily move the scroll bar using only his or her finger in order to remove the inconvenience, the appearance of a display screen may be spoiled and the limited display area may be inefficiently used.

An aspect of the present invention is to address at least the problems and/or disadvantages and to provide at least the advantages described below. Accordingly, the object of the present invention is to provide a scrolling apparatus and method for allowing a user to conveniently perform scrolling without using a separate tool.

This object is solved by the subject matter of the independent claims.

Preferred embodiments are defined in the dependent claims.

Another aspect of the present invention is to provide a scrolling apparatus and method for allowing a user to easily perform scrolling using his or her finger without using a separate tool while maintaining the appearance of a display screen.

According to one aspect of the present invention, there is provided a data scrolling apparatus for a mobile terminal. The data scrolling apparatus includes a display unit with a touch screen, for displaying a touch-scroll area according to a touch-screen input received from a user and displaying data items scrolled by movement of a scroll bar when the scroll bar is moved; a touch scroll detection unit for determining whether the touch-screen input received from the user is an input for performing a touch-scroll function; and a control unit for controlling the display unit so that the touch-scroll area is displayed and the scroll bar is moved with movement of a location at which the touch-screen input is detected, if it is determined that the touch-screen input received from the user is an input for performing the touch-scroll function as a result of the determination of the touch scroll detection unit.

According to another aspect of the present invention, there is provided a data scrolling method for a mobile terminal with a touch screen. The data scrolling method includes determining whether a touch-screen input is an input for performing a touch-scroll function when the touch-screen input is received; generating and displaying a touch-scroll area according to a currently displayed scroll bar if it is determined that the touch-screen input is the input for performing the touch-scroll function; and moving the scroll bar with movement of a detected location of the current touch-screen input, and displaying data items scrolled by movement of the scroll bar.

The above object and other aspects, features and advantages of the present invention will become more apparent from the following detailed description when taken in conjunction with the accompanying drawings in which:

FIG. 1 is a block diagram of a mobile terminal according to an embodiment of the present invention;
FIG. 2 is a flowchart showing the scrolling operation of a mobile terminal based on a touch-screen input according to an embodiment of the present invention;
FIGS. 3A and 3B are diagrams showing examples of a touch-scroll area displayed by a scroll bar in a mobile terminal according to an embodiment of the present invention;

FIGS. 4A to 4E are diagrams showing examples of a screen for a scrolling operation when the location of a touch-screen input is not included in a touch-scroll area in a mobile terminal according to an embodiment of the present invention;

FIGS. 5A to 5C are diagrams showing examples of a screen for a scrolling operation when the location of a touch-screen input is included in a touch-scroll area in a mobile terminal according to an embodiment of the present invention;

FIG. 6 is a flowchart showing an operating sequence when a scrolling speed changes depending on the detected location of a touch-screen input in a mobile terminal according to an embodiment of the present invention;

FIGS. 7A and 7B are diagrams showing examples of the case where the detected location of a touch-screen input changes in a mobile terminal according to an embodiment of the present invention; and

FIG. 8 is a flowchart showing an operating sequence when a scrolling speed dynamically changes depending on the detected location of a touch-screen input in a mobile terminal according to an embodiment of the present invention.

Preferred embodiments of the present invention will now be described in detail with reference to the annexed drawings. In the drawings, the same or similar elements are denoted by the same reference numerals even though they are depicted in different drawings. In the following description, a detailed description of known functions and configurations incorporated herein has been omitted for clarity and conciseness.

First, in order to facilitate an understanding of the present invention, the basic principles of the present invention are described below. In the present invention, when a touch-screen input is received from a user, it is determined whether the input is a touch-scroll input for moving a scroll bar, and if it is determined that the input is a touch-scroll input, a touch-scroll area set according to the currently displayed scroll bar is displayed on the screen. Further, when the touch-screen input received from the user is included in the touch-scroll area, the scroll bar is moved according to the touch-screen input received from the user, and data items, scrolled by the movement of the scroll bar, are displayed on the screen. Accordingly, the present invention can allow the user to easily scroll through data, without using a separate tool or increasing the size of the scroll bar

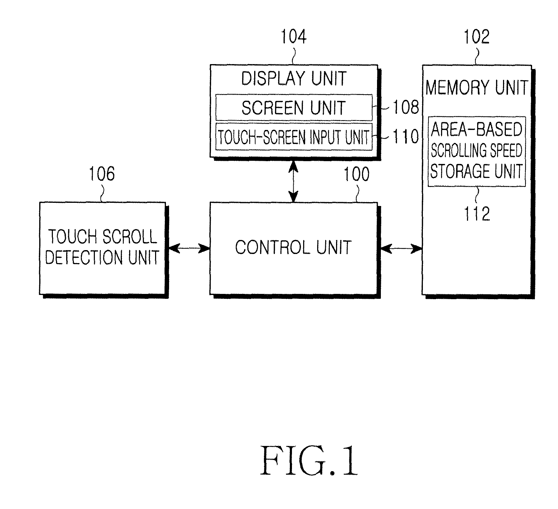

FIG. 1 is a block diagram of a mobile terminal according to an embodiment of the present invention.

Referring to FIG. 1, the mobile terminal according to the embodiment of the present invention includes a control unit 100, and a memory unit 102, a display unit 104, and a touch scroll detection unit 106, all of which are connected to the control unit 100. The control unit 100 processes various types of audio signals and data according to functions of the mobile terminal, such as protocols for call service, data communication, and wireless Internet access, and controls respective components of the mobile terminal.

Further, when a touch-screen input is received from a user, the control unit 100 determines whether the touch-screen input received from the user is used to move a scroll bar, and if it is determined that the touch-screen input is an input for performing a touch-scroll function, generates a touch-scroll area according to the size of a currently displayed scroll bar and displays the touch-scroll area on the screen of the display unit 104. Further, when a location at which the touch-screen input is detected is not included in the currently displayed touch-scroll area, the control unit 100 controls the display unit 104 so that a touch detection line can be displayed on the screen. Further, when the detected location of the touch-screen input is included in the touch-scroll area, the control unit 100 moves the scroll bar according to the touch-screen input, thus displaying a list of scrolled data items on the screen. The control unit 100 can adjust the speed of scrolling depending on the detected location of the touch-screen input.

Further, the display unit 104, which includes a screen unit 108 and a touch-screen input unit 110, generates image information and displays the image information on the screen of the mobile terminal through the screen unit 108 under the control of the control unit 100. When a key input received from the user is a key input for performing the touch-scroll function, the display unit 104 displays a touch-scroll area corresponding to a size of the current scroll bar. Further, the display unit 104 may display a touch detection line under the control of the control unit 100. Further, when the scroll bar is moved, the display unit 104 displays a list of data items, scrolled by the moved scroll bar, on the screen of the terminal through the screen unit 108. Further, when there is a key input received from the user through the touch-screen input unit 110, the display unit 104 applies a signal corresponding to the key input to the control unit 100.

The touch scroll detection unit 106 determines whether the touch-screen input is an input for performing the touch-scroll function under the control of the control unit 100. For example, the touch scroll detection unit 106 can be implemented using a kind of timer. In this case, when an input from the user is detected through the touch-screen input unit 110, the control unit 100 applies the user input to the touch scroll detection unit 106, and thus determines whether the touch-screen input received from the user is an input for performing the touch-scroll function depending on whether the touch-screen input received from the user is maintained for a preset period of time or longer.

Further, the touch scroll detection unit 106 receives information about the detected location of the touch-screen input received from the user, i.e., coordinate information, together with the user input, and determines whether the location of the touch-screen input received from the user has changed, thereby determining whether the user touches the touch screen for performing the touch-scroll function or for another operation. In this case, the touch scroll detection unit 106 can determine that the touch-screen input is the input for performing the touch-scroll function when the location of the touch-screen input has not changed for a certain period of time or longer.

The memory unit 102, connected to the control unit 100, includes Read Only Memory (ROM), flash memory, Random Access Memory (RAM), etc. The memory unit 102 provides an area for storing various types of programs for the processing and control of the control unit 100 and various types of reference data, an area for the working memory of the control unit 100, and an area for storing various types of updatable storage data.

Further, when the mobile terminal according to the present invention provides different scrolling speeds according to the detected location of the current touch-screen input, the memory unit 102 can store information related to these scrolling speeds. For example, the information related to the scrolling speeds may be information about scrolling speeds preset for specific display areas, or information about equations required to calculate scrolling speeds using a specific direction component of location values, i.e., coordinate values, at the detected location of the current touch-screen input. Hereinafter, the storage area of the memory unit 102 for storing information related to scrolling speeds in this way is referred to as an area-based scrolling speed storage unit 112.

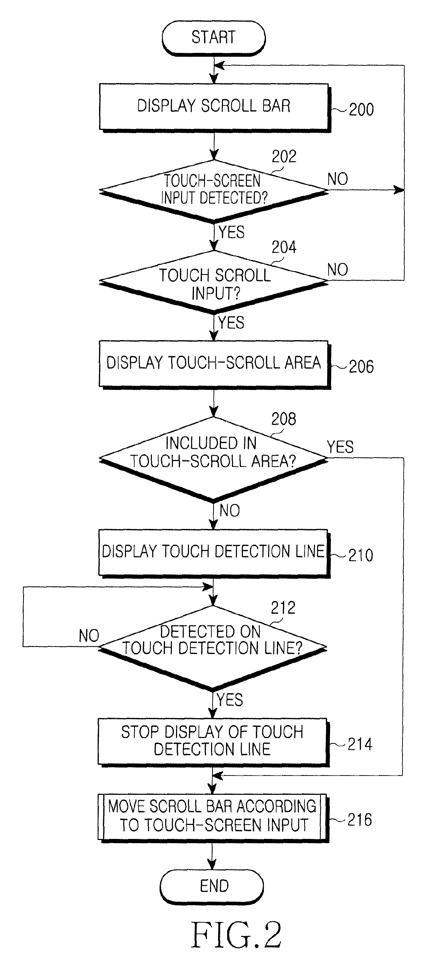

FIG. 2 is a flowchart showing the scrolling operation of a mobile terminal based on a touch-screen input according to the present invention. FIG. 2 illustrates an example of an operation of scrolling through a data list in the mobile terminal . However, since scrolling can be generally used for displayed images as well as data lists, it would be obvious to those skilled in the art that, although the scrolling is applied herein to a data list, by way of example, this is not intended to limit the present invention to the scrolling of a data list.

Referring to FIG. 2, in step 200, the control unit 100 displays a part of a data list selected by the user on the screen, and displays a scroll bar to scroll through the part of the data list. In step 202, the control unit 100 determines whether an input has been received from a touch screen.

If it is determined in step 202 that the touch-screen input has been received, the control unit 100 determines in step 204 whether the current touch-screen input is an input for performing the touch-scroll function. Such a determination can be performed on a basis of the result of the determination of the touch scroll detection unit 106, as described above, e.g., whether the touch-screen input is maintained for a preset period of time or longer, or whether the time for which the detected location of the touch-screen input remains unchanged is equal to or longer than a preset period of time, can be used as a criterion for determining whether the touch-screen input is an input for performing the touch-scroll function.

If it is determined in step 204 that the currently detected touch-screen input is the input for performing the touch-scroll function, the control unit 100 proceeds to step 206 where it displays a touch-scroll area on the screen through the screen unit 108. The 'touch-scroll area' as used herein refers to an area obtained by greatly extending the area of the scroll bar so as to allow the user to easily scroll through data, and also refers to an area displayed on the screen depending on the size of a currently displayed scroll bar.

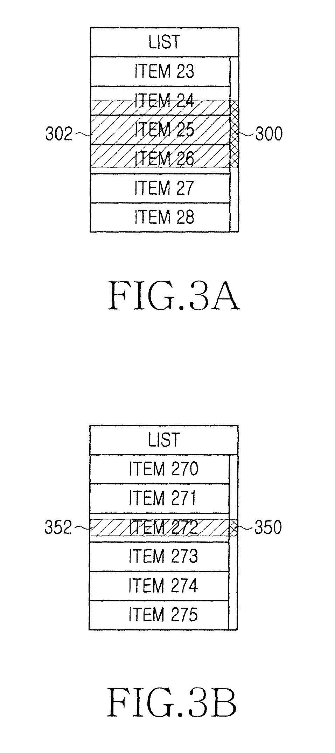

FIGS. 3A and 3B are diagrams showing examples of the touch-scroll area. As shown in FIGS. 3A and 3B, a mobile terminal according to the present invention can generate an area of the screen, disposed to be horizontal to a scroll bar, as a touch-scroll area. Generally, the number of data items that can be included in a data list is not limited, but the number of data items that can be displayed on a single screen is limited. Accordingly, the ratio of currently displayed data items to all of the data items included in the data list changes depending on the number of all data items, and thus the size of the scroll bar is subject to change according to the data ratio.

For example, if the total number of the data items included in the data list is 60 while the maximum possible number of data items displayed on a single screen is 6, the ratio of currently displayed data items to all data items is 0.1 (former). However, if the total number of all data items included in the data list is 600, the ratio of currently displayed data items to all data items is 0.01 (latter). In this case, the size of the scroll bar is changeable according to the ratio.

FIG. 3A illustrates an example of the former case. The control unit 100 of the mobile terminal according to the present invention sets a touch-scroll area according to the size of a scroll bar 300, as described above. Accordingly, when the number of data items included in the data list is small, a large touch-scroll area 302 can be generated according to the size of the large scroll bar 300, as shown in FIG. 3A.

However, in the latter case, when the number of data items included in the data list is large, the size of the scroll bar decreases. FIG. 3B illustrates an example of the latter case. Therefore, when the number of data items included in the data list is large in this way, the size of a scroll bar 350 decreases, as shown in FIG. 3B, and thus a small touch-scroll area 352 can be generated.

Further, if the touch-scroll area corresponding to the size of the current scroll bar is generated and displayed on the screen in step 206, the control unit 100 determines in step 208 whether the detected location of the current touch-screen input is included in the generated touch-scroll area. Further, if it is determined that the detected location of the current touch-screen input is not included in the currently displayed touch-scroll area, the control unit 100 proceeds to step 210 where it displays a touch detection line, which is an indication line required to notify the user whether the detected location of the touch-screen input received from the user is included in the touch-scroll area.

Such a touch detection line can be displayed in any region of the touch-scroll area. For example, when a currently set scrolling direction is a bottom-to-top or top-to-bottom direction, the control unit 100 can display the touch detection line on the uppermost or lowermost line of the touch-scroll area, or the central line of the touch-scroll area perpendicular to the direction of a vertical axis, i.e., a Y-axis. Further, when a currently set scrolling direction is a left-to-right or right-to-left direction, the control unit can display the touch detection line on the leftmost or rightmost line of the touch-scroll area, or the central line of the touch-scroll area perpendicular to the direction of a horizontal axis, i.e., an X-axis.

The control unit 100 determines in step 212 whether the touch-screen input received from the user has been detected in an area in which the touch detection line is displayed. If it is determined that the touch-screen input has been detected in the area in which the touch detection line is displayed, the control unit 100 stops in step 214 the display of the touch detection line, determining that the current touch-screen input received from the user is included in the area currently set to the touch-scroll area. The control unit 100 moves in step 216 the scroll bar according to the user's touch-screen input, and displays a list of data items scrolled by the movement of the scroll bar.

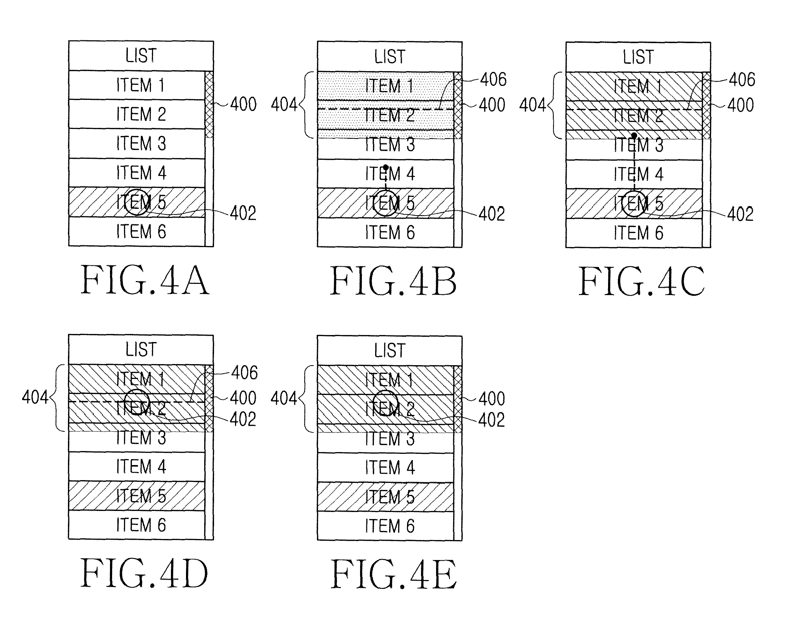

FIGS. 4A to 4E are diagrams showing examples of a screen for a scrolling operation when the location of a touch-screen input is not included in a touch-scroll area in a mobile terminal according to the present invention. FIGS. 4A to 4E illustrate the case where a touch detection line is displayed on the central line of the touch-scroll area perpendicular to a vertical direction when a currently set scrolling direction is a top-to-bottom direction.

Referring to FIGS. 4A to 4E, in the displayed state of FIG. 4A where the location of reference numeral 402 corresponds to the location of a touch-screen input received from the user, if it is determined that the touch-screen input is an input for performing the touch-scroll function, the control unit 100 generates a touch-scroll area 404 according to the size of a scroll bar, as shown in FIG. 4B, and displays a touch detection line 406 thereon in step 210.

The control unit 100 continues to display the touch detection line 406 until the touch-screen input received from the user is detected in an area in which the touch detection line 406 is displayed, as shown in FIG. 4C. However, if the touch-screen input received from the user is detected at the location at which the touch detection line 406 is displayed, as shown in FIG. 4D, the control unit 100 stops in step 214 the display of the touch detection line 406, as shown in FIG. 4E. The control unit 100 moves in step 216 the scroll bar according to the touch-screen input received from the user, and displays data items scrolled by the movement of the scroll bar.

However, if it is determined in step 208 that the location of the touch-screen input is included in the currently set touch-scroll area, the control unit 100 jumps to step 216 where it moves the scroll bar according to the touch-screen input received from the user, without displaying the touch detection line. Subsequently, the control unit 100 displays data items scrolled by the movement of the scroll bar.

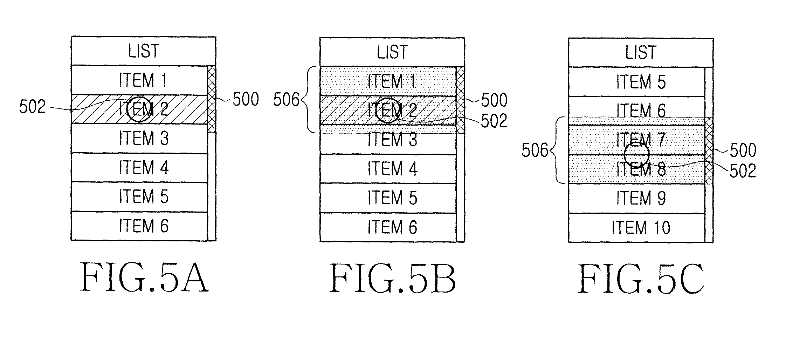

FIGS. 5A to 5C are diagrams showing examples of a screen for a scrolling operation when the location of a touch-screen input is included in a touch-scroll area in a mobile terminal according to the present invention.

Referring to FIGS. 5A to 5C, in the example of FIG. 5A where the location of reference numeral 502 is the location of a touch-screen input received from a user, if it is determined that the touch-screen input is an input for performing the touch-scroll function, the control unit 100 generates a touch-scroll area 506 according to the size of a scroll bar, as shown in FIG. 5B, and determines in step 208 that the location of the touch-screen input is included in the currently generated touch-scroll area. Then, the control unit 100 directly proceeds to step 216 where the control unit 100 moves the scroll bar according to the touch-screen input received from the user, and displays data items scrolled by the movement of the scroll bar, as shown in FIG. 5C.

In this case, the touch detection line is not displayed because such a touch-screen input is an additional means for indicating whether the touch-screen input received from the user is included in the touch-scroll area, i.e., it is apparent that scrolling may be performed based only on whether the touch-screen input received from the user is included in the touch-scroll area in step 208, instead of step 210 of displaying the touch detection line and step 212 of determining whether the touch-screen input is included in the area in which the touch detection line is displayed. In this case, the control unit 100 can notify the user whether the location of the touch-screen input received from the user is included in the touch-scroll area, using other methods. For example, a method of changing a color currently used to indicate the touch-scroll area, etc. can be used.

Unfortunately, regardless of where the user touches the current screen, a scrolling speed is constant. In the case where the scrolling speed corresponding to the touch-screen input is low, this case is suitable when the number of data items included in the entire data list is small, but this case is problematic in that, when the number of data items is large, the touch-screen input must be maintained for a long period of time so as to search for the user's desired data. In contrast, in a case where the movement speed of the scroll bar is high, this case is suitable when the number of data items included in the entire data list is large, but this case is problematic in that, when the number of data items is small or when the user's desired data items are adjacent to each other, it is difficult to search for the user's desired data.

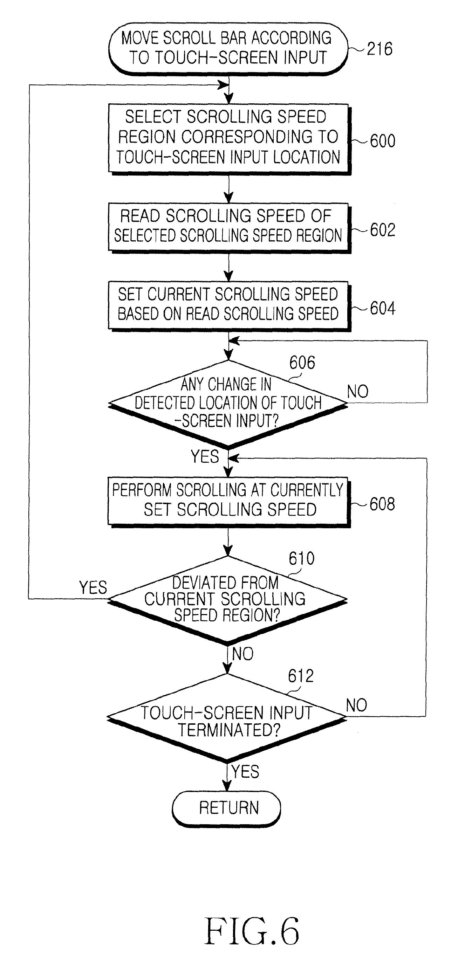

In order to solve this problem, the control unit 100 of the mobile terminal according to an embodiment of the present invention can adjust a scrolling speed according to the detected location of a touch-screen input, as described above. FIGS. 6 to 8 are diagrams showing the operation of changing a scrolling speed according to the detected location of a touch-screen input in a mobile terminal according to the present invention.

In particular, it is assumed in FIG. 6 that the mobile terminal according to the present invention divides a current display area into a plurality of scrolling speed regions having differently set scrolling speeds, and changes a current scrolling speed on a basis of the scrolling speed of a region corresponding to the detected location of the touch-screen input received from the user.

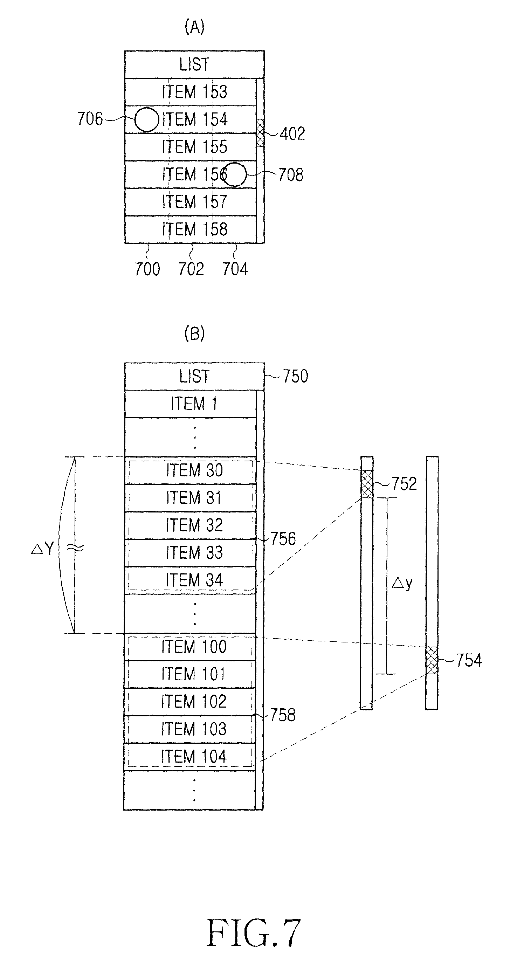

When the current display area is divided into a plurality of scrolling speed regions having differently set scrolling speeds in this way, the control unit 100 selects, in step 600, a scrolling speed region corresponding to the detected location of a current touch-screen input. For example, the display area can be divided into 3 scrolling speed regions, as shown in FIGS. 7A and 7B.

In this case, the scrolling speed regions have different scrolling speeds. For example, such a scrolling speed can be determined by Equation(1),

$$\Delta Y = C \cdot \Delta y \dots\dots\dots\dots\dots\dots\dots\dots\dots\dots\dots\dots\dots\dots\dots\dots (1)$$

where $\Delta Y$ denotes the distance by which data items are actually scrolled in the entire data list, C denotes a speed coefficient differently set for each scrolling speed region, and $\Delta y$ denotes the movement distance of the scroll bar.

In detail, for example, as shown in FIG. 7B, it is assumed that there is the entire data list 750, and the location of a scroll bar corresponding to a data list 756 displayed on the current screen is the location of reference numeral 752. At this time, if a data list 758 is displayed on the screen when the user moves the scroll bar to the location of reference numeral 754, the distance from a 30th item to a 100th item in the length of the entire data list 750, i.e., the distance by which data items are actually scrolled by the movement of the scroll bar in the length of the entire data list, can be $\Delta Y$ Further, the movement distance of the scroll bar, i.e., the distance from reference numeral 752 to reference numeral 754 can be $\Delta y$. Therefore, when speed coefficients C of respective scrolling speed regions are set to, for example, 4, 2 and 1, scrolling speeds currently set for respective scrolling speed regions can be defined by Table 1.

**Table 1**

| Scrolling Speed Region | Scrolling Speed |
|---|---|
| First scrolling speed region (700) | $\Delta Y = 4\Delta y$ |
| Second scrolling speed region (702) | $\Delta Y = 2\Delta y$ |
| Third scrolling speed region (704) | $\Delta Y = \Delta y$ |

Therefore, the scrolling speed of the first scrolling speed region 700 is four times that of the third scrolling speed region 704, and is twice that of the second scrolling speed region 702. In this state, when the location of the touch-screen input is the location of reference numeral 706, the control unit 100 selects in step 600 the first scrolling speed region 700, determining that a scrolling speed region corresponding to the location of the current touch-screen input is the first scrolling speed region 700. Then, the control unit 100 reads in step 602 the scrolling speed of the scrolling speed region corresponding to the location of the current touch-screen input, i.e., the first scrolling speed region 700, for example, $4\Delta y$. Thereafter, the control unit 100 sets in step 604 a current scrolling speed on the basis of the read scrolling speed. Therefore, the scrolling speed is set to $4\Delta y$, and thus the speed that is twice that of the second scrolling speed region 702 and that is four times that of the third scrolling speed region 704 is set.

Next, the control unit 100 determines in step 606 whether the detected location of the current touch-screen input has changed. If it is determined in step 606 that the location of the touch-screen input has changed, the control unit 100 proceeds to step 608 where the control unit 100 scrolls through a data list depending on the touch-screen input received from the user, and displays the scrolled data on the screen. The control unit 100 determines in step 610 whether the detected location of the touch-screen input received from the user deviates from the currently selected scrolling speed region.

If it is determined in step 610 that the detected location of the touch-screen input received from the user does not deviate from the currently selected scrolling speed region, the control unit 100 determines in step 612 whether the touch-screen input has been terminated. If it is determined that the touch-screen input has not been terminated, the control unit 100 returns back to step 608 where it scrolls through the data list depending on the touch-screen input received from the user, and displays scrolled data items on the screen. However, if it is determined in step 612 that the touch-screen input has been terminated, the control unit 100 terminates the touch scroll operation, determining that the user stops the scrolling operation.

Meanwhile, if it is determined in step 610 that the detected location of the touch-screen input received from the user deviates from the currently selected scrolling speed region, the control unit 100 returns back to step 600, where the control unit 100 selects a scrolling speed region corresponding to the detected location of the current touch-screen input. For example, as shown in FIGS. 7A and 7B, when the user moves a touch-screen input from the location of reference numeral 706 to the location of reference numeral 708, the control unit 100 determines in step 610 that the detected location of the current touch-screen input deviates from the currently selected scrolling speed region. In this case, the control unit 100 returns back to step 600 where it selects the third scrolling speed region 704, which is the scrolling speed region corresponding to the detected location of the current touch-screen input, i.e., the location of reference numeral 708. Thereafter, the control unit 100 proceeds to steps 602 and 604 where it reads the scrolling speed of the currently selected scrolling speed region, i.e., the third scrolling speed region 704, and sets the read scrolling speed to a current scrolling speed. In this case, the scrolling speed is decreased to 1/4 of the speed obtained when the detected location of the touch-screen input is the location of reference numeral 706. Thereafter, the control unit 100 repeats the process of step 606 to step 610, in which it scrolls through the data list depending on the touch-screen input received from the user, and displays scrolled data items on the screen.

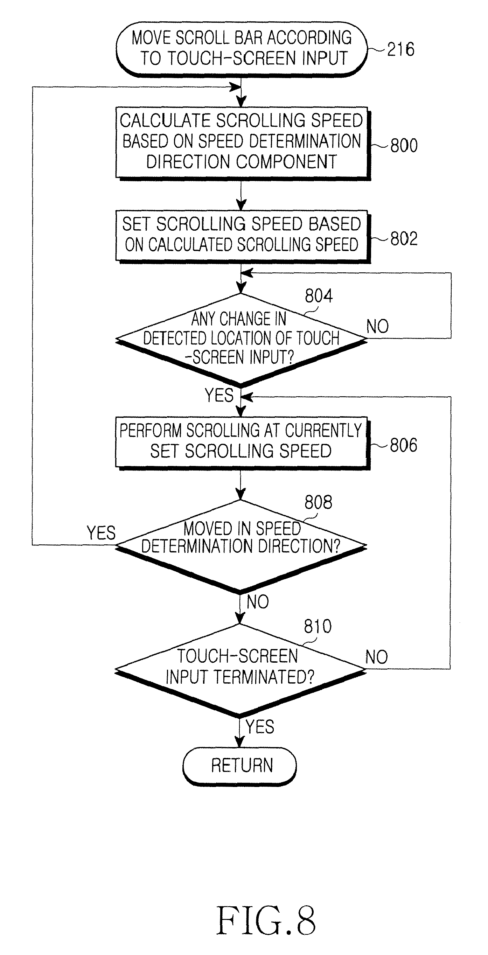

FIG. 8 is a flowchart showing another operation of dynamically changing a scrolling speed depending on the detected location of a touch-screen input in a mobile terminal according to the present invention. For example, FIG. 6 and FIGS. 7A and 7B illustrate the case where the entire display area is divided into scrolling speed regions having different scrolling speeds and scrolling speeds are differently set for respective scrolling speed regions, by way of example, whereas FIG. 8 illustrates a case where the display area is not divided, a scrolling speed is dynamically calculated based on the detected location of a current touch-screen input, and a current scrolling speed is changed depending on the dynamically calculated scrolling speed.

Referring to FIG. 8, if it is determined that a touch-screen input received from the user is an input for performing the touch-scroll function, the control unit 100 of the mobile terminal according to the present invention calculates in step 800 a scrolling speed based on the speed determination direction component corresponding to the detected location of the current touch-screen input.

In this case, the speed determination direction component can be set according to the direction of scrolling. When a preset scrolling direction is a bottom-to-top or top-to-bottom direction, i.e., the direction of a Y-axis, the speed determination direction can be a horizontal direction, i.e., the direction of an X-axis. Accordingly, the speed determination direction component can be the X-axis component of the coordinates at the detected location of the current touch-screen input. When a preset scrolling direction is a left-to-right or right-to-left direction, i.e., the direction of the X-axis, the speed determination direction can be a vertical direction, i.e., the direction of the Y-axis. Accordingly, the speed determination direction component can be the Y-axis component of the coordinates at the detected location of the current touch-screen input.

In this case, the control unit 100 extracts in step 800 the value of the speed determination direction component corresponding to the detected location of the current touch-screen input, and applies the extracted value to preset equation required to calculate a scrolling speed, thereby calculating the scrolling speed corresponding to the detected location of the current touch-screen input. An example of this equation is given as Equation (2),

$$\Delta Y = R(P) \cdot \Delta y \dots\dots\dots\dots\dots\dots\dots\dots\dots\dots\dots\dots\dots\dots\dots\dots\dots\dots\dots (2)$$

where P denotes the value of the currently set speed determination direction component of the coordinate values at the detected location of the current touch-screen input.

When the currently preset scrolling direction is the Y-axis direction, P denotes a coordinate value in the X-axis direction. Further, R denotes a speed conversion coefficient, which is a value required to convert the value of the speed determination direction component into a speed value for scrolling. Thus, R(P) can be defined as Equation (3),

$$R(P) = \frac{L_S - L_T}{L_S X_S} P + \frac{L_T}{L_S} \dots\dots\dots\dots\dots\dots\dots\dots\dots\dots\dots\dots\dots\dots\dots\dots (3)$$

where $L_T$ is the vertical length of the entire data list to be currently selected, $L_S$ is the vertical length of a current screen, and $X_S$ is the horizontal length of the current screen.

Accordingly, the speed conversion coefficient R(P) may be a negative or positive value, which is determined according to the direction set to increase or decrease a scrolling speed when the detected location of the touch-screen input is moved. For example, when the speed conversion coefficient R(P) is a negative value, the result of Equation (2)

indicates a graph of a linear function having a negative gradient. Accordingly, as the X-axis coordinate value at the detected location of the touch-screen input is moved from the left to the right, or as the Y-axis coordinate value at the detected location of the touch-screen input is moved from the top to the bottom, a scrolling speed is calculated as a smaller value. In contrast, when the speed conversion coefficient R(P) is a positive value, the result of Equation (2) indicates a graph of a linear function having a positive gradient. Accordingly, as the X-axis coordinate value at the detected location of the touch-screen input is moved from the left to the right, or as the Y-axis coordinate value at the detected location of the touch-screen input is moved from the top to the bottom, a scrolling speed is calculated as a larger value.

When the calculation of the scrolling speed corresponding to the detected location of the current touch-screen input has been completed in this way, the control unit 100 sets in step 802 a current scrolling speed on the basis of the calculated scrolling speed. The control unit 100 determines in step 804 whether the detected location of the current touch-screen input has changed. If it is determined in step 804 that the detected location of the current touch-screen input has changed, the control unit 100 scrolls in step 806 through a data list at the currently set scrolling speed, and displays scrolled data items on the screen.

The control unit 100 determines in step 808 whether the detected location of the touch-screen input has moved in a preset speed determination direction. If it is determined that the detected location of the touch-screen input has not moved in the preset speed determination direction, the control unit 100 determines in step 810 whether the touch-screen input received from the user has been terminated. If it is determined that the touch-screen input received from the user has been terminated, the control unit 100 terminates the touch scroll operation, determining that the user terminates the touch scroll operation. However, if it is determined that the touch-screen input received from the user has not been terminated, the control unit 100 returns to step 806 where it scrolls through a data list at the currently set scrolling speed, and displays scrolled data items on the screen. Thereafter, the control unit 100 determines in step 808 whether the detected location of the current touch-screen input has moved in a preset speed determination direction.

However, if it is determined in step 808 that the detected location of the touch-screen input has moved in the preset speed determination direction, the control unit 100 returns to step 800 where it calculates a scrolling speed based on the speed determination direction component corresponding to the detected location of the current touch-screen input. Thereafter, the control unit 100 repeats the process of step 802 to step 808, in which it performs scrolling depending on the touch-screen input received from the user at the scrolling speed corresponding to the touch-screen input, and displays the scrolled data list.

As is apparent from the foregoing description, according to the present invention, a user can easily move a scroll bar without utilizing a separate tool and spoiling the appearance of the display of a mobile terminal. In addition, a scrolling speed is freely adjustable according to the location of a touch-screen input received from the user, facilitating an easy search for the user's desired data.

Although detailed embodiments have been described in the above description of the present invention, various modifications can be implemented without departing from the scope of the present invention. While embodiments of the present invention have been described especially for the case where the scrolling direction is determined along the direction of the Y-axis, by way of example, the present invention can also be applied to the case where the scrolling direction is determined along the direction of the X-axis. Therefore, the scope of the present invention should be defined by the appended claims rather than the above-described embodiments.

## Claims

1. A data scrolling apparatus for a mobile terminal, comprising:

   a display unit with a touch screen, for displaying a touch-scroll area according to a touch-screen input received from a user and displaying data items scrolled by movement of a scroll bar when the scroll bar is moved;
   a touch scroll detection unit for determining whether the touch-screen input received from the user is an input for performing a touch-scroll function; and
   a control unit for, if it is determined that the touch-screen input received from the user is an input for performing the touch-scroll function as a result of the determination of the touch scroll detection unit, controlling the display unit so that the touch-scroll area is displayed and the scroll bar is moved with a movement of a location at which the touch-screen input is detected.

2. The data scrolling apparatus of claim 1, wherein the control unit is adapted to determine whether the detected location of the touch-screen input received from the user is included in the touch-scroll area, and if it is determined that the detected location of the touch-screen input is included in the touch-scroll area, to control the display unit so that the scroll bar is moved with movement of the detected location of the touch-screen input.

3. The data scrolling apparatus of claim 2, wherein, if it is determined that the detected location of the touch-screen input is not included in the touch-scroll area, the control unit is further adapted to display a touch detection line, which is an indication line for notifying the user whether the detected location of the touch-screen input received from the user is included in the touch-scroll area

4. The data scrolling apparatus of claim 3, wherein the control unit is further adapted to stop displaying the touch detection line if it is determined that the detected location of the touch-screen input is included in the touch-scroll area.

5. The data scrolling apparatus of claim 1, wherein the control unit is adapted to control the display unit so that a scrolling speed at which the data items are scrolled changes according to the detected location of the touch-screen input.

6. The data scrolling apparatus of claim 5, wherein the control unit is further adapted to divide a display area of the display unit, in which image information is displayed, into a plurality of scrolling speed regions having different scrolling speeds, and to control the display unit so that the data items are scrolled at a scrolling speed of a scrolling speed region corresponding to the detected location of the touch-screen input.

7. The data scrolling apparatus of claim 5, wherein the control unit is further adapted to extract a coordinate value corresponding to a currently set speed determination direction component from coordinate values at the detected location of the current touch-screen input, and to change the scrolling speed using the extracted coordinate value.

8. The data scrolling apparatus of one of claims 1 to 7, wherein the touch scroll detection unit is adapted to determine whether the touch-screen input is the input for performing the touch-scroll function depending on whether a time for which the touch-screen input is detected is greater than or equal to a detection time preset to determine whether the touch-screen input is the input for performing the touch-scroll function.

9. The data scrolling apparatus of claim 8, wherein if it is determined that the time for which the touch-screen input is detected is greater than or equal to the preset detection time the touch scroll detection unit further determines whether coordinate values at the detected location of the touch-screen input have changed for the detection time, thus determining whether the touch-screen input is the input for performing the touch-scroll function.

10. The data scrolling apparatus of one of claims 1 to 9, wherein the touch-scroll area is generated according to a size of the scroll bar.

11. A data scrolling method for a mobile terminal with a touch screen, comprising:

determining whether a touch-screen input is an input for performing a touch-scroll function when the touch-screen input is received;
if it is determined that the touch-screen input is the input for performing the touch-scroll function, generating and displaying a touch-scroll area according to a currently displayed scroll bar; and
moving the scroll bar with a movement of a detected location of the current touch-screen input, and displaying data items scrolled by the movement of the scroll bar.

12. The data scrolling method of claim 11, wherein moving of the scroll bar and displaying of the data items comprises:

determining whether the detected location of the touch-screen input is included in the touch-scroll area; and
if it is determined that the detected location of the touch-screen input is included in the touch-scroll area, moving the scroll bar with movement of the detected location of the touch-screen input, and displaying data items scrolled by movement of the scroll bar.

13. The data scrolling method of claim 12, wherein moving of the scroll bar and displaying the data items further comprises:

if it is determined that the detected location of the touch-screen input is not included in the touch-scroll area, displaying a touch detection line;
determining whether the touch-screen input has been detected in an area in which the touch detection line is displayed; and
if it is determined that the touch-screen input has been detected in the area in which the touch detection line is displayed, stopping the display of the touch detection line.

14. The data scrolling method of claim 11, wherein moving of the scroll bar and displaying the data items comprises:

checking the detected location of the touch-screen input; and
changing a scrolling speed at which the data items are scrolled depending on the detected location of the touch-screen input.

15. The data scrolling method of claim 14, wherein changing the scrolling speed comprises:

reading a scrolling speed of a scrolling speed region corresponding to the detected location of the touch-screen input, among a plurality of scrolling speed regions having different scrolling speeds; and
changing a currently set scrolling speed based on the read scrolling speed.

16. The data scrolling method of claim 14, wherein changing the scrolling speed comprises:

extracting a coordinate value corresponding to a currently set speed determination direction component from coordinate values at the detected location of the touch-screen input;
calculating a new scrolling speed using the extracted coordinate value; and
changing a currently set scrolling speed based on the calculated scrolling speed.

17. The data scrolling method of one of claims 11 to 16, wherein if it is determined that the touch-screen input has been received, the determining of whether the touch-screen input is the input for performing the touch-scroll function is performed depending on whether a time for which the touch-screen input is detected is greater than or equal to a detection time, preset to determine whether the touch-screen input is the input for performing the touch-scroll function.

18. The data scrolling method of claim 17, wherein if it is determined that the time for which the touch-screen input is detected is greater than or equal to the preset detection time, the determining of whether the touch-screen input is the input for performing the touch-scroll function further comprises determining whether coordinate values at the detected location of the touch-screen input have changed for the detection time.

19. The data scrolling method of one of claims 11 to 18, wherein the touch-scroll area is generated according to a size of the scroll bar.

FIG.1

START

DISPLAY SCROLL BAR ~200

TOUCH-SCREEN INPUT DETECTED? 202 —NO→

YES

TOUCH SCROLL INPUT? 204 —NO→

YES

DISPLAY TOUCH-SCROLL AREA ~206

INCLUDED IN TOUCH-SCROLL AREA? 208 —YES→

NO

DISPLAY TOUCH DETECTION LINE ~210

DETECTED ON TOUCH DETECTION LINE? 212 —NO

YES

STOP DISPLAY OF TOUCH DETECTION LINE ~214

MOVE SCROLL BAR ACCORDING TO TOUCH-SCREEN INPUT ~216

END

# FIG.2

| LIST |
|---|
| ITEM 23 |
| ITEM 24 |
| ITEM 25 |
| ITEM 26 |
| ITEM 27 |
| ITEM 28 |

302 ~                                    ~ 300

# FIG.3A

| LIST |
|---|
| ITEM 270 |
| ITEM 271 |
| ITEM 272 |
| ITEM 273 |
| ITEM 274 |
| ITEM 275 |

352 ~                                    ~ 350

# FIG.3B

LIST

ITEM 1
ITEM 2
ITEM 3
ITEM 4
ITEM 5
ITEM 6

FIG.4C

406
400
402
404

LIST

ITEM 1
ITEM 2
ITEM 3
ITEM 4
ITEM 5
ITEM 6

FIG.4B

406
400
402
404

LIST

ITEM 1
ITEM 2
ITEM 3
ITEM 4
ITEM 5
ITEM 6

FIG.4A

400
402

LIST

ITEM 1
ITEM 2
ITEM 3
ITEM 4
ITEM 5
ITEM 6

FIG.4E

400
402
404

LIST

ITEM 1
ITEM 2
ITEM 3
ITEM 4
ITEM 5
ITEM 6

FIG.4D

406
400
402
404

EP 1 942 403 A2

| LIST |
|------|
| ITEM 1 |
| ITEM 2 |
| ITEM 3 |
| ITEM 4 |
| ITEM 5 |
| ITEM 6 |

502 — 500 —

FIG.5A

| LIST |
|------|
| ITEM 1 |
| ITEM 2 |
| ITEM 3 |
| ITEM 4 |
| ITEM 5 |
| ITEM 6 |

506 — 500 — 502 —

FIG.5B

| LIST |
|------|
| ITEM 5 |
| ITEM 6 |
| ITEM 7 |
| ITEM 8 |
| ITEM 9 |
| ITEM 10 |

506 — 500 — 502 —

FIG.5C

MOVE SCROLL BAR ACCORDING
TO TOUCH-SCREEN INPUT ~216

SELECT SCROLLING SPEED
REGION CORRESPONDING TO
TOUCH-SCREEN INPUT LOCATION ~600

READ SCROLLING SPEED OF
SELECTED SCROLLING SPEED REGION ~602

SET CURRENT SCROLLING SPEED
BASED ON READ SCROLLING SPEED ~604

606
ANY CHANGE IN
DETECTED LOCATION OF TOUCH
-SCREEN INPUT?
NO

YES

PERFORM SCROLLING AT CURRENTLY
SET SCROLLING SPEED ~608

610
DEVIATED FROM
CURRENT SCROLLING
SPEED REGION?
YES
NO

612
TOUCH-SCREEN INPUT
TERMINATED?
NO

YES

RETURN

FIG.6

(A)

| LIST |
|---|
| ITEM 153 |
| ITEM 154 |
| ITEM 155 |
| ITEM 156 |
| ITEM 157 |
| ITEM 158 |

706 — ○

402

708

700   702   704

(B)

| LIST | ~750 |
|---|---|
| ITEM 1 | |
| : | |
| ITEM 30 | |
| ITEM 31 | |
| ITEM 32 | |
| ITEM 33 | |
| ITEM 34 | |
| : | |
| ITEM 100 | |
| ITEM 101 | |
| ITEM 102 | |
| ITEM 103 | |
| ITEM 104 | |
| : | |

$\triangle Y$

756

758

752

754

$\triangle y$

# FIG.7

MOVE SCROLL BAR ACCORDING TO TOUCH-SCREEN INPUT — 216

CALCULATE SCROLLING SPEED BASED ON SPEED DETERMINATION DIRECTION COMPONENT — 800

SET SCROLLING SPEED BASED ON CALCULATED SCROLLING SPEED — 802

804 ANY CHANGE IN DETECTED LOCATION OF TOUCH-SCREEN INPUT? — NO

YES

PERFORM SCROLLING AT CURRENTLY SET SCROLLING SPEED — 806

808 MOVED IN SPEED DETERMINATION DIRECTION? — YES

NO

810 TOUCH-SCREEN INPUT TERMINATED? — NO

YES

RETURN

FIG.8